(19) Europäisches Patentamt
European Patent Office
Office européen des brevets

(11) **EP 4 403 973 A1**

(12) **EUROPÄISCHE PATENTANMELDUNG**

(43) Veröffentlichungstag:
**24.07.2024 Patentblatt 2024/30**

(21) Anmeldenummer: **24150769.8**

(22) Anmeldetag: **08.01.2024**

(51) Internationale Patentklassifikation (IPC):
*G02B 7/14* (2021.01)    *G02B 13/00* (2006.01)
*G02B 13/18* (2006.01)    *G02B 27/00* (2006.01)

(52) Gemeinsame Patentklassifikation (CPC):
**G02B 7/14; G02B 13/0055; G02B 13/18;
G02B 27/0068**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **20.01.2023 DE 102023101416**

(71) Anmelder: **Arnold & Richter Cine Technik GmbH
& Co.
Betriebs KG
80807 München (DE)**

(72) Erfinder:
• **PESCH, Matthias
80796 München (DE)**
• **HECKER, Cornelius
81679 München (DE)**

(74) Vertreter: **Manitz Finsterwald
Patent- und Rechtsanwaltspartnerschaft mbB
Martin-Greif-Strasse 1
80336 München (DE)**

(54) **VERWENDUNG EINER ZUSATZOPTIK, OBJEKTIVSYSTEM UND KAMERASYSTEM**

(57) Eine Zusatzoptik mit positiver Brechkraft wird dazu verwendet, durch Einbringen der Zusatzoptik zwischen einem Kameraobjektiv und einem Bildsensor einer Kamera eine durch das Kameraobjektiv auf dem Bildsensor erzeugte optische Abbildung zu beeinflussen, wobei die Mittendicke der Zusatzoptik und die Brechkraft der Zusatzoptik derart aufeinander abgestimmt sind, dass für eine vorbestimmte Arbeitsblende des Kameraobjektivs ein durch das Kameraobjektiv definiertes Auflagemaß durch das Einbringen der Zusatzoptik im Wesentlichen unverändert bleibt.

Fig.1

**Beschreibung**

Die Erfindung betrifft die Verwendung einer Zusatzoptik zur Beeinflussung einer durch ein Kameraobjektiv auf einem Bildsensor einer Kamera erzeugten optischen Abbildung, ein Objektivsystem, welches ein mit einer Kamera wahlweise koppelbares Kameraobjektiv und eine Zusatzoptik umfasst, sowie ein Kamerasystem mit einer Kamera und einem derartigen Objektivsystem.

Bei professionellen Bewegtbildaufnahmen können insbesondere Kameras mit Wechselobjektiven eingesetzt werden, die wahlweise an einen Objektivanschluss des Kamerakörpers der Kamera koppelbar sind und sich beispielsweise in ihrer Brennweite unterscheiden können, um die Kamera mit einem für eine jeweilige Aufnahmesituation angepassten Kameraobjektiv ausstatten zu können. Verschiedene Wechselobjektive einer Objektivreihe können zudem derart aufeinander abgestimmt sein, dass eine subjektive Bildanmutung und beispielsweise eine Farbwiedergabe oder eine Auflösungsleistung bei einem Wechsel des Kameraobjektivs erhalten bleiben und der Wechsel des Kameraobjektivs in der Aufnahme somit nur durch die Änderung des Objektwinkels hervortritt.

Insbesondere können Wechselobjektive bei professionellen Bewegtbildaufnahmen zudem im Hinblick auf die jeweilige erzeugte Bildanmutung ausgewählt werden, um einen bestimmten "Look" der Aufnahme zu erreichen. Einen häufig bevorzugten "Look" können dabei sogenannte Vintage-Objektive, etwa Kameraobjektive aus den 1960er Jahren, hervorrufen. Ein derartiger "Look" kann auch bei heutigen modernen Aufnahmen gewünscht sein.

Beispielsweise können derartige Vintage-Objektive eine gegenüber heutigen professionellen Kameraobjektiven eingeschränkte Abbildungsleistung aufweisen, so dass in einer von der Kamera durch ein Vintage-Objektiv erzeugten Abbildung Abbildungsfehler entstehen können, die jedoch gerade das charakteristische Bokeh oder die gewünschte Bildanmutung der Abbildung bestimmen können. Moderne Kameraobjektive sind hingegen in der Regel im Hinblick auf solche Abbildungsfehler möglichst präzise korrigiert, um Abbildungsfehler zu vermeiden und durchgängig scharfe, hochaufgelöste Abbildungen zu erhalten.

Um dennoch die angestrebte Bildanmutung eines Vintage-Objektivs zu erreichen, können daher auch bei modernen Bewegtbildaufnahmen beispielsweise Linsensätze alter Kameraobjektive, etwa aus den 1960er Jahren, eingesetzt und mit einer angepassten, modernen Mechanik versehen werden, so dass die alten Linsensätze in Verbindung mit Kameras nach dem derzeitigen Stand der Technik eingesetzt werden können. Zudem können beispielsweise im Hinblick auf optische Aberrationen gut korrigierte Kameraobjektive bewusst und etwa durch Veränderung von Linsenabständen aus dem Zustand guter Korrektur herausjustiert werden, um gezielt Abbildungsfehler zu erzeugen und den "Look" eines Vintage-Objektivs nachzubilden.

Ferner ist grundsätzlich bekannt, Zusatzoptiken einzusetzen, um die Abbildungscharakteristik eines optischen Systems zu verändern. Beispielsweise können dazu sogenannte Effektfilter, insbesondere plane Glasplatten, vor dem Objektiv eingebracht werden, die gezielt Streulicht in das System einbringen können, um Abbildungsfehler zu erzeugen. Zudem können derartige Zusatzoptiken grundsätzlich auch zwischen dem Kameraobjektiv und der Kamera eingebracht werden, wozu beispielsweise zwischen dem Kameraobjektiv und der Kamera ein Adapter eingesetzt werden kann, in welchen die Zusatzoptik eingesetzt werden kann.

Ein tatsächliches Verwenden von Vintage-Objektiven birgt jedoch die Problematik, dass das Alter der Kameraobjektive und deren jahrzehntelange Nutzung häufig einen schlechten Zustand der Optiken mit sich bringen und auch andere Parameter der Kameraobjektive auf technisch veraltetem Stand sind, indem die Optiken beispielsweise unzureichende Antireflexbeschichtungen aufweisen können. Ein Nachjustieren von korrigierten Kameraobjektiven, um gezielt Abbildungsfehler zu erzeugen, erfordert hingegen häufig einen tiefen und aufwendigen konstruktiven Eingriff in das Kameraobjektiv, der lediglich durch erfahrene Servicetechniker durchgeführt werden kann. Zudem können durch eine etwaige unsachgemäße Handhabung gegebenenfalls Beschädigungen an dem Kameraobjektiv entstehen und es kann sich schwierig gestalten, nach einer solchen Nachjustierung den Auslieferungszustand des Kameraobjektivs bzw. einen vollständig korrigierten Zustand des Kameraobjektivs wiederherzustellen.

Ferner muss bei Verwendung eines anderen Kameraobjektivs oder einer Zusatzoptik das sogenannte Auflagemaß beachtet werden. Das Auflagemaß entspricht an der Kamera dem Abstand zwischen der Bildebene (also der Ebene des Bildsensors) und der Auflageebene für das zu koppelnde Kameraobjektiv. Ein Kameraobjektiv ist für ein bestimmtes Auflagemaß der zugeordneten Kamera ausgelegt, d.h. die Optik eines Kameraobjektivs definiert ein Auflagemaß, welches dem Auflagemaß der verwendeten Kamera entsprechen muss, damit eine Scharfstellung des Kameraobjektivs mit der darauf befindlichen Fokusskala (Entfernungsskala) übereinstimmt. Als Auflagemaß s eines Objektivs wird im Folgenden der Abstand der Auflagefläche des Objektivs am Objektivanschluss von dem durch die Optik des Objektivs entstehenden axialen Fokuspunkt verstanden.

Durch ein Anbringen einer Zusatzoptik zwischen dem Kameraobjektiv und der Kamera kann sich jedoch das durch das (bloße) Kameraobjektiv definierte Auflagemaß verändern, so dass in der Anwendung die Fokusskala des Kameraobjektivs verfälscht und eine Einstellung des Fokus erschwert wird. Zudem können insbesondere infolge von starken Auflagemaßänderungen auch durch das Kameraobjektiv grundsätzlich zu erreichende Fokusbereiche gegebenenfalls nicht mehr erreicht werden, so dass mit dem Einbringen der Zusatzoptik eingeschränkte Verwendungsmöglichkeiten des Kameraobjektivs einhergehen können. Zwar kann grundsätzlich versucht werden, die Veränderung des Auflagemaßes beispielsweise über Beilagscheiben mechanisch zu kompensieren, jedoch sind etwaige kurzfristigen Anpassungen insbesondere an einem Filmset infolge der geringen zur Verfügung stehenden Zeit in der Regel nicht umzusetzen, so dass das veränderte Auflagemaß und die dadurch erschwerte Einstellung des Fokus meist hingenommen werden müssen.

Es ist daher eine Aufgabe der Erfindung, eine auf möglichst einfache und zuverlässige Weise ohne großen konstruktiven Aufwand umsetzbare Möglichkeit zur Beeinflussung einer durch ein Kameraobjektiv auf einem Bildsensor einer Kamera erzeugten optischen Abbildung und insbesondere zum gezielten Erzeugen von Abbildungsfehlern zu schaffen.

Diese Aufgabe wird gelöst durch eine Verwendung einer Zusatzoptik gemäß den Merkmalen des unabhängigen Anspruchs 1.

Gemäß Anspruch 1 wird zur Beeinflussung einer durch ein Kameraobjektiv auf einem Bildsensor einer Kamera erzeugten optischen Abbildung eine Zusatzoptik mit positiver Brechkraft verwendet, wobei die optische Abbildung durch Einbringen der Zusatzoptik zwischen dem Kameraobjektiv und dem Bildsensor der Kamera beeinflusst wird. Es wird eine Zusatzoptik verwendet, deren Mittendicke und deren Brechkraft derart aufeinander abgestimmt sind, dass für eine vorbestimmte Arbeitsblende des Kameraobjektivs ein durch das Kameraobjektiv definiertes Auflagemaß durch das Einbringen der Zusatzoptik im Wesentlichen unverändert bleibt.

Indem eine Zusatzoptik verwendet wird, um eine durch das Kameraobjektiv auf dem Bildsensor der Kamera erzeugte optische Abbildung zu verändern, muss somit nicht auf ein tatsächliches Vintage-Objektiv zurückgegriffen oder die Justierung von Optiken des Kameraobjektivs verändert werden, um die gewünschte Beeinflussung der optischen Abbildung zu erreichen. Vielmehr kann grundsätzlich ein modernes, im Hinblick auf Abbildungsfehler korrigiertes Kameraobjektiv verwendet werden, dessen Mechanik und Parameter vollständig nach dem momentanen Stand der Technik ausgebildet sein können.

Die Mittendicke und die Brechkraft der Zusatzoptik sind derart aufeinander abgestimmt, dass zumindest für eine vorbestimmte Arbeitsblende des Kameraobjektivs ein durch das Kameraobjektiv definiertes Auflagemaß durch das Einbringen der Zusatzoptik im Wesentlichen unverändert bleibt. Dies bedeutet, dass das System aus Kameraobjektiv und Zusatzoptik zumindest für eine vorbestimmte Arbeitsblende des Kameraobjektivs dasselbe Auflagemaß definiert wie das Kameraobjektiv alleine, welches für eine jeweilige Kamera ausgelegt ist. Hierdurch kann verhindert werden, dass sich durch das Einbringen der Zusatzoptik die Fokusskala des Objektivs verändert. Insofern können auch die Ansteuerung des Kameraobjektivs und durch das Kameraobjektiv vorgegebene Einstellungen oder Abbildungsparameter erhalten bleiben, wenn die Zusatzoptik eingebracht ist. Die Brechkraft der Zusatzoptik ist generell durch den Brechungsindex des Materials und Krümmungsradien der verwendeten Linse(n) der Zusatzoptik bestimmt.

Gewissermaßen können durch das Verwenden einer Zusatzoptik mit positiver Brechkraft zwei gegenläufige Effekte kompensiert werden. Zunächst geht das Einbringen der Zusatzoptik als ein zusätzlicher Glasweg in einem Strahlengang durch das Kameraobjektiv hindurch bis zu dem Bildsensor der Kamera grundsätzlich mit einer Vergrößerung des vom Kameraobjektiv definierten Auflagemaßes einher, so dass sich ein durch das Kameraobjektiv bestimmter Fokuspunkt von dem Kameraobjektiv weg verschiebt. Diese Verschiebung kann insbesondere als Auflagemaßverlängerung $\Delta s1$ bezeichnet werden. Eine solche Auflagemaßverlängerung $\Delta s1$ kann für eine Planplatte (d.h. planparallele Platte) der Dicke d berechnet bzw. für eine Zusatzoptik der Mittendicke d bei großen Krümmungsradien und entsprechend geringer Brechung angenähert werden als:

$$\Delta s_1 = d\frac{n-1}{n},$$

wobei n den Brechungsindex des Materials der Planplatte bezeichnet.

Aufgrund der Verwendung einer Zusatzoptik mit positiver Brechkraft kann jedoch ein konvergierendes Strahlenbündel hinter dem Kameraobjektiv stärker fokussiert und der Fokuspunkt in Richtung des Kameraobjektivs versetzt werden, so dass durch eine entsprechende Abstimmung zwischen der Mittendicke und der Brechkraft der Zusatzoptik die erläuterte Auflagemaßverlängerung ausgeglichen wird und das durch das Kameraobjektiv bestimmte Auflagemaß durch das Einbringen der Zusatzoptik im Wesentlichen unverändert bleiben kann, d.h. durch die Kombination aus Kameraobjektiv und Zusatzoptik nicht verändert wird.

Für eine im konvergierenden Strahlengang zwischen Kameraobjektiv und Bildebene angebrachte, als ideal dünn angenommene Einzellinse mit positiver Brechkraft lässt sich die Auflagemaßveränderung $\Delta s2$ berechnen als

$$\Delta s_2 = \left(\frac{1}{f_z} + \frac{1}{u}\right)^{-1} - u,$$

wobei $f_z$ die Brennweite der Einzellinse und u den Abstand der Einzellinse vom Fokuspunkt des Kameraobjektivs angibt.

Die genannten Beiträge zur Auflagemaßveränderung kompensieren sich, wenn

$$\Delta s_1 = -\Delta s_2,$$

und somit kann bei durch die Wahl eines optischen Materials vorgegebenem Brechungsindex n und bei Vorgabe einer positiven Brechkraft $1/f_z$ die zur Kompensation erforderliche Dicke d einer Planplatte genähert werden als

$$d = -\frac{n}{n-1}\left(\left(\frac{1}{f_z} + \frac{1}{u}\right)^{-1} - u\right).$$

Bezogen auf die Brennweite ergibt sich durch das Einbringen der Zusatzoptik in der beschriebenen Weise die Brennweite fs des Systems aus Kameraobjektiv (mit Brennweite $f_K$) und Zusatzoptik (mit Brennweite $f_z$) zu:

$$f_S = \frac{f_K}{u}\left(\left(\frac{1}{f_z} + \frac{1}{u}\right)^{-1}\right).$$

Die hier dargestellten idealisierten Abschätzungen ermöglichen eine prinzipielle Auslegung der Zusatzoptik. Die detaillierte Optimierung der erforderlichen Mittendicke unter Einbeziehung der gewünschten Oberflächengeometrien, Materialien und Position der Zusatzoptik im Strahlengang ist für den erfahrenen Optikdesigner einfach möglich, insbesondere unter Verwendung von gängiger Software für Computer-gestütztes Optikdesign.

Dier beschriebene Kompensationseffekt kann zumindest für eine vorbestimmte Arbeitsblende des Kameraobjektivs erreicht werden. Als Arbeitsblende ist in diesem Zusammenhang ein Einstellungswert einer veränderlichen Blende des Kameraobjektivs zu verstehen, beispielsweise einer Irisblende. Ein solcher Einstellungswert entspricht einer vorbestimmten Öffnungsweite der Blende. Die Blende kann insbesondere in oder nahe einer Hauptebene des Kameraobjektivs angeordnet sein.

Insbesondere kann es das Einbringen der Zusatzoptik daher ermöglichen, in einer Bildmitte oder an einem Punkt, an welchem eine optische Achse des Kameraobjektivs auf den Bildsensor trifft, eine unveränderte Fokussierung zu erreichen, wenn die Zusatzoptik eingebracht ist. Hingegen kann die Zusatzoptik, beispielsweise durch einen variablen Krümmungsverlauf einer Linsenfläche, dazu ausgebildet sein, Abbildungsfehler und beispielsweise sphärische Aberrationen zu erzeugen, so dass etwa ein Schärfeverlauf einer auf dem Bildsensor erzeugten Abbildung durch Einbringen der Zusatzoptik gezielt beeinflusst werden kann. Beispielsweise kann durch das Einbringen der Zusatzoptik die Bildschärfe zu den Rändern der Abbildung oder des Bildsensors hin gezielt reduziert werden, um einen "Look" oder die Bildanmutung eines Vintage-Objektivs mit verringerter Schärfeleistung nachbilden zu können.

Zudem bieten derartige Zusatzoptiken auch die Möglichkeit, verschiedene Zusatzoptiken zur Beeinflussung einer durch ein bestimmtes Kameraobjektiv auf dem Bildsensor erzeugten optischen Abbildung zu verwenden, indem eine jeweilige der verschiedenen Zusatzoptiken zwischen dem Kameraobjektiv und dem Bildsensor der Kamera eingebracht wird. Die Zusatzoptiken können sämtlich eine positive Brechkraft aufweisen, welche derart auf die Mittendicke der jeweiligen Zusatzoptik abgestimmt ist, dass ein durch das Kameraobjektiv für eine bestimmte Arbeitsblende definiertes Auflagemaß durch das Einbringen einer jeweiligen der Zusatzoptiken im Wesentlichen unverändert bleibt. Jedoch können sich beispielsweise jeweilige Linsendurchbiegungen oder Krümmungsverläufe von Flächen der Zusatzoptiken voneinander unterscheiden, so dass die Zusatzoptiken dazu ausgebildet sein können, verschiedenartige optische Aberrationen zu erzeugen. Es kann daher beispielsweise ein Set von Zusatzoptiken zur Verfügung gestellt und/oder verwendet werden, welche wahlweise zwischen dem Kameraobjektiv und dem Bildsensor der Kamera eingebracht werden können, ohne das durch das Kameraobjektiv definierte Auflagemaß zu verändern, wobei durch Einbringen einer jeweiligen Zusatzoptik gezielt gewünschte Abbildungsfehler erzeugt werden können.

Jedoch kann durch das Einbringen der Zusatzoptik und etwaige durch die Zusatzoptik erzeugte sphärische Aberrationen eine Abhängigkeit der axialen Lage des besten Fokuspunkts von der eingestellten Arbeitsblende des Objektivs entstehen, so dass die Auslegung der Zusatzoptiken grundsätzlich die gewünschte Arbeitsblende berücksichtigen muss und gegebenenfalls nur für diese Arbeitsblende die Erhaltung des Auflagemaßes gewährleisten kann. Bei einem Betreiben des Kameraobjektivs mit veränderten Arbeitsblenden können daher Abweichungen der Fokuslage entstehen, wobei auch dieser Effekt jedoch insbesondere bei Vintage-Optiken mit relevanten sphärischen Aberrationen ebenfalls auftreten und daher von Anwendern berücksichtigt oder gegebenenfalls sogar zur Nachbildung eines Vintage-Objektivs gewünscht sein kann. Die Optimierung der Lage des besten Fokuspunkts auf die gewünschte Arbeitsblende hängt von den gewünschten Kriterien für den besten Fokuspunkt ab, ist dem erfahrenen Designer jedoch einfach möglich.

Weitere Ausführungsformen sind den abhängigen Ansprüchen, der Beschreibung sowie den Figuren zu entnehmen.

Die Zusatzoptik kann bei einigen Ausführungsformen dazu ausgebildet sein, sphärische Aberrationen zu erzeugen. Alternativ oder zusätzlich kann die Zusatzoptik bei einigen Ausführungsformen dazu ausgebildet sein, eine Schärfeleistung des Kameraobjektivs insgesamt zu reduzieren, so dass das Einbringen der Zusatzoptik beispielsweise auch zu einer reduzierten Schärfeleistung in einer Bildmitte bzw. einem Schnittpunkt zwischen einer optischen Achse des Kameraobjektivs und dem Bildsensor führen kann. Ausgehend von dem Schnittpunkt zwischen der optischen Achse und dem Bildsensor kann die Schärfe der Abbildung bei eingebrachter Zusatzoptik zudem beispielsweise in Richtung der Bildränder und/oder radial bezüglich der optischen Achse weiter und/oder zunehmend verringert sein, wobei zum Bildfeldrand hin beispielsweise noch weitere Aberrationen, etwa eine Bildfeldwölbung oder eine Koma-Aberration, hinzukommen können. Auch ein solcher Schärfeverlauf ist häufig charakteristisch für Vintage-Objektive, die insofern durch das Einsetzen der Zusatzoptik nachgebildet werden können.

Bei einigen Ausführungsformen kann die Zusatzoptik innerhalb der hinteren Schnittweite des Kameraobjektivs eingebracht werden.

Wenigstens eine Fläche der Zusatzoptik, insbesondere eine dem Kameraobjektiv abgewandte Fläche und/oder eine dem Kameraobjektiv zugewandte Fläche der Zusatzoptik, kann bei einigen Ausführungsformen zumindest abschnittsweise asphärisch ausgebildet sein.

Beispielsweise kann eine dem Kameraobjektiv abgewandte Fläche und/oder eine dem Kameraobjektiv zugewandte Fläche der Zusatzoptik einen unregelmäßigen Krümmungsverlauf aufweisen, so dass auf die Zusatzoptik auftreffende Strahlen in Abhängigkeit von dem Auftreffort auf die und/oder von dem Austrittsort aus der Zusatzoptik verschieden stark gebrochen und gezielt ortsabhängige Abbildungsfehler erzeugt werden können. Zudem kann die dem Kameraobjektiv abgewandte Fläche und/oder die dem Kameraobjektiv zugewandte Fläche der Zusatzoptik bei einigen Ausführungsformen abschnittsweise plan ausgebildet sein und/oder mehrere plan ausgebildete, in unterschiedlichen Winkeln zu der optischen Achse ausgerichtete Flächenabschnitte umfassen, um auch hierdurch eine positionsabhängige Brechkraft der Zusatzoptik und ortsabhängige optische Aberrationen erzeugen zu können.

Die Zusatzoptik kann bei einigen Ausführungsformen in einem Hohlraum zwischen dem Kameraobjektiv und der Kamera aufgenommen werden. Insbesondere kann vorgesehen sein, dass die Zusatzoptik bei an der Kamera befestigtem Kameraobjektiv in eine an dem Kameraobjektiv oder der Kamera vorgesehene Aufnahme eingebracht wird, so dass insbesondere kein Adapter mit der Kamera und/oder dem Kameraobjektiv verbunden werden muss, um die Zusatzoptik einsetzen zu können. Dadurch kann ein mechanisches Abstandsmaß des Kameraobjektivs als der Abstand zwischen einer Befestigungsfläche des Kameraobjektivs an einem Kamerakörper und dem Bildsensor der Kamera durch das Einbringen der Zusatzoptik unverändert bleiben. Indem zudem auch das durch das Kameraobjektiv bestimmte Auflagemaß aufgrund der Abstimmung zwischen der Brechkraft und der Mittendicke der Zusatzoptik durch das Einbringen der Zusatzoptik nicht (wesentlich) verändert wird, kann somit insbesondere eine Fokusskala des Ka

meraobjektivs erhalten bleiben, wenn die Zusatzoptik eingebracht wird.

Der Hohlraum, in dem die Zusatzoptik aufgenommen wird, kann bei einigen Ausführungsformen teilweise in dem Kameraobjektiv und teilweise in der Kamera ausgebildet sein (d.h. auf beiden Seiten des Objektivanschlusses der Kamera, beispielsweise auf beiden Seiten einer Anliegefläche des Kamerakörpers für das Kameraobjektiv). Bei anderen Ausführungsformen kann der Hohlraum für die Zusatzoptik vollständig in dem Kameraobjektiv oder vollständig in der Kamera ausgebildet sein.

Zudem kann die Zusatzoptik bei einigen Ausführungsformen zunächst mit dem Kameraobjektiv verbunden werden, um das Kameraobjektiv daraufhin an der Kamera zu befestigen.

Die Zusatzoptik kann bei einigen Ausführungsformen dazu ausgebildet sein, derart zwischen dem Kameraobjektiv und der Kamera eingebracht zu werden, dass das Kameraobjektiv auch bei Verwendung der Zusatzoptik unmittelbar an einen Objektivanschluss der Kamera koppelbar ist, also in gleicher Weise und Anordnung wie ohne Zusatzoptik. Mit anderen Worten kann das Kameraobjektiv auf dieselbe Weise an der Kamera befestigbar sein, wenn die Zusatzoptik eingebracht ist, wie das Kameraobjektiv auch dann befestigt wird, wenn die Zusatzoptik nicht eingebracht ist. Die an dem Kameraobjektiv befestigte Zusatzoptik kann dazu beispielsweise in einen an einem Kamerakörper vorgesehenen Hohlraum oder eine an dem Kamerakörper vorgesehene axiale Öffnung einbringbar sein, wohingegen das Kameraobjektiv an dem Kamerakörper, einem daran vorgesehenen Objektivanschluss und/oder einer Begrenzung des Hohlraums befestigbar sein kann.

Die Erfindung betrifft ferner ein Verfahren zum Beeinflussen einer optischen Abbildung, die durch ein Kameraobjektiv auf einem Bildsensor einer Kamera erzeugt wird, bei dem zwischen dem Kameraobjektiv und dem Bildsensor der Kamera eine Zusatzoptik mit positiver Brechkraft eingebracht wird, deren Mittendicke und Brechkraft derart aufeinander abgestimmt sind, dass für eine vorbestimmte Arbeitsblende des Kameraobjektivs ein durch das Kameraobjektiv definiertes Auflagemaß durch das Einbringen der Zusatzoptik im Wesentlichen unverändert bleibt, wie vorstehend erläutert.

Die Erfindung betrifft ferner ein Objektivsystem umfassend ein mit einer Kamera wahlweise koppelbares Kameraobjektiv sowie eine zwischen dem Kameraobjektiv und einem Bildsensor der Kamera einbringbare Zusatzoptik mit positiver Brechkraft, wobei die Mittendicke der Zusatzoptik und die Brechkraft der Zusatzoptik derart aufeinander abgestimmt sind, dass für eine vorbestimmte Arbeitsblende des Kameraobjektivs eine durch das Kameraobjektiv definiertes Auflagemaß durch das Einbringen der Zusatzoptik im Wesentlichen unverändert bleibt. Die Zusatzoptik eines solchen Objektivsystems kann generell ausgebildet und angeordnet sein, wie vorstehend im Zusammenhang mit der erfindungsgemäßen Verwendung der Zusatzoptik erläutert.

Wie bereits erläutert, ermöglicht eine derartige Zusatzoptik insbesondere, eine bei Verwendung des Kameraobjektivs auf dem Bildsensor der Kamera erzeugte optische Abbildung gezielt zu beeinflussen, ohne dass das Einbringen der Zusatzoptik mit einer Veränderung einer Fokusskala des Kameraobjektivs einhergeht oder eine konstruktive Veränderung des Kameraobjektivs und/oder der Kamera erfordert. Die Zusatzoptik ermöglicht es daher, das Kameraobjektiv wahlweise mit eingebrachter Zusatzoptik oder ohne Zusatzoptik zu verwenden, wobei eine Ansteuerung des Kameraobjektivs durch das Einbringen der Zusatzoptik nicht angepasst oder verändert werden muss. Durch das Einbringen einer entsprechend gestalteten Zusatzoptik kann daher beispielsweise auf einfache Weise das Nachbilden eines Vintage-Objektivs bei Verwendung eines modernen Kameraobjektivs ermöglichen, um jedoch bei Bedarf durch einfaches Entnehmen der Zusatzoptik auf das unveränderte, moderne und insbesondere im Hinblick auf optische Aberrationen korrigierte Kameraobjektiv und dessen Abbildungseigenschaften zurückgreifen zu können.

Das Kameraobjektiv kann bei einigen Ausführungsformen unmittelbar an einem Objektivanschluss der Kamera befestigbar sein, während die Zusatzoptik zwischen dem Kameraobjektiv und dem Bildsensor der Kamera eingebracht ist. Insofern kann das Kameraobjektiv bei einigen Ausführungsformen auf dieselbe Weise an der Kamera befestigbar sein, wenn die Zusatzoptik zwischen dem Kameraobjektiv und dem Bildsensor der Kamera eingebracht ist, auf welche das Kameraobjektiv auch dann an der Kamera befestigbar ist, wenn die Zusatzoptik nicht zwischen dem Kameraobjektiv und dem Bildsensor der Kamera eingebracht ist. Das Einbringen der Zusatzoptik kann daher bei einigen Ausführungsformen ohne eine Veränderung des Abstandsmaßes des Kameraobjektivs (als der Abstand zwischen einer Befestigungsfläche des Kameraobjektivs und dem Bildsensor der Kamera) erfolgen.

Beispielsweise kann es vorgesehen sein, dass die Zusatzoptik zunächst an dem Kameraobjektiv befestigbar ist, um das Kameraobjektiv daraufhin an dem Objektivanschluss der Kamera zu befestigen. Dazu kann die mit dem Kameraobjektiv verbundene Zusatzoptik beispielsweise in einen an einem Kamerakörper der Kamera vorgesehenen Hohlraum einbringbar sein und/oder in einen solchen Hohlraum hineinragen, wenn das Kameraobjektiv an dem Objektivanschluss der Kamera befestigt und die Zusatzoptik zwischen dem Kameraobjektiv und dem Bildsensor der Kamera eingebracht ist.

Alternativ oder zusätzlich kann auch vorgesehen sein, dass das Kameraobjektiv und/oder die Kamera eine Aufnahme aufweisen, in welche die Zusatzoptik wahlweise einbringbar sein kann, wenn das Kameraobjektiv an dem Objektivanschluss befestigt ist. Beispielsweise kann die Zusatzoptik in einen an der Kamera vorgesehenen Schlitz einschiebbar sein, um zwischen dem Kameraobjektiv und dem Bildsensor der Kamera positioniert zu werden.

Das Objektivsystem kann bei einigen Ausführungsformen mehrere verschiedene wahlweise zwischen dem Kameraobjektiv und dem Bildsensor der Kamera einbringbare Zusatzoptiken mit positiver Brechkraft umfassen, deren jeweilige Mittendicke und Brechkraft derart aufeinander abgestimmt sind, dass für die vorbestimmte Arbeitsblende des Kameraobjektivs das durch das Kameraobjektiv definierte Auflagemaß durch das Einbringen der jeweiligen Zusatzoptik unverändert bleibt. Zudem können die mehreren Zusatzoptiken dazu ausgebildet sein, unterschiedliche jeweilige sphärische Aberrationen in einer durch das Kameraobjektiv aufgenommenen Abbildung zu erzeugen.

Bei einem solchen Objektivsystem kann somit gewissermaßen ein Set von mehreren Zusatzoptiken bereitgestellt sein, welche wahlweise zwischen dem Kameraobjektiv und dem Bildsensor der Kamera eingebracht werden können, ohne jedoch das für die vorbestimmte Arbeitsblende des Kameraobjektivs definierte Auflagemaß zu verändern. Insbesondere können dabei verschiedene Zusatzoptiken vorgesehen sein, um durch Einbringen einer jeweiligen Zusatzoptik den "Look" eines jeweiligen Vintage-Objektivs oder dessen Abbildungseigenschaften nachbilden zu können. Die mehreren Zusatzoptiken können insbesondere verschiedene Brechkräfte aufweisen und somit unterschiedlich starke Aberrationen verursachen. Insbesondere können Flächen der mehreren Zusatzoptiken unterschiedlich gestaltet sein, um verschiedene Abbildungsfehler durch Einsetzen einer jeweiligen Zusatzoptik erzeugen zu können.

Die mehreren Zusatzoptiken können bei einigen Ausführungsformen verschiedene Linsendurchbiegungen aufweisen. Insbesondere können die mehreren Zusatzoptiken verschiedene asphärische Krümmungsverläufe aufweisen, wobei insbesondere von dem Kameraobjektiv weg weisende Flächen der Zusatzoptiken und/oder dem Kameraobjektiv zugewandte Flächen der Zusatzoptiken verschiedene asphärische Krümmungsverläufe aufweisen können. Zudem können dem Kameraobjektiv abgewandte Flächen und/oder dem Kameraobjektiv zugewandte Flächen der Zusatzoptiken zumindest abschnittsweise asphärisch und/oder zumindest abschnittsweise plan ausgebildet sein, um verschiedene Abbildungsfehler erzeugen zu können.

Allgemein können somit dem Kameraobjektiv abgewandte Flächen und/oder dem Kameraobjektiv zugewandte Flächen der mehreren Zusatzoptiken voneinander verschieden ausgebildet sein. Eine dem Kameraobjektiv "abgewandte" oder "zugewandte" Fläche einer Zusatzoptik kann sich insbesondere auf einen korrekt eingebrachten Zustand der jeweiligen Zusatzoptik beziehen.

Ferner kann die Zusatzoptik des Objektivsystems oder können die mehreren Zusatzoptiken des Objektivsystems eines oder mehrere der vorstehend bereits im Zusammenhang mit der Verwendung einer derartigen Zusatzoptik oder mehrerer derartiger Zusatzoptiken genannten Merkmale aufweisen.

Die Erfindung betrifft zudem ein Kamerasystem umfassend eine Kamera, die einen Bildsensor aufweist, und ein Objektivsystem der vorstehend erläuterten Art.

Insbesondere kann das Kameraobjektiv des Objektivsystems auf die Kamera abgestimmt und dazu ausgelegt sein, an der Kamera befestigt zu werden. Die Zusatzoptik oder, bei einigen Ausführungsformen, die mehreren Zusatzoptiken können zudem auf das Kameraobjektiv und/oder die Kamera abgestimmt sein, um zwischen dem Kameraobjektiv und dem Bildsensor der Kamera eingebracht werden zu können. Beispielsweise können die Zusatzoptiken an einem der Kamera zugewandten Endabschnitt des Kameraobjektivs anbringbar oder in eine an dem Kameraobjektiv oder der Kamera vorgesehenen Aufnahme einbringbar sein.

Die Kamera, insbesondere auch die Kamera, bei welcher die Zusatzoptik verwendet werden kann, kann insbesondere als Bewegtbildkamera ausgebildet sein.

Die Erfindung wird im Folgenden rein beispielhaft anhand von Ausführungsbeispielen unter Bezugnahme auf die Zeichnungen erläutert.

Es zeigen:

Fig. 1  eine schematische Darstellung eines Kamerasystems, welches eine Kamera sowie ein Objektivsystem mit einem Kameraobjektiv und mehreren wahlweise zwischen dem Kameraobjektiv und einem Bildsensor der Kamera einbringbaren Zusatzoptiken umfasst,

Fig. 2A und 2B  eine schematische Darstellung des Objektivsystems bei an dem Kameraobjektiv angebrachter Zusatzoptik bzw. eine schematische Darstellung des Kamerasystems bei eingebrachter Zusatzoptik,

Fig. 3  eine schematische Darstellung einer weiteren Ausführungsform des Kamerasystems,

Fig. 4A bis 4D  eine jeweilige schematische Darstellung zur Veranschaulichung eines Strahlengangs durch das Kameraobjektiv und des Auftreffens der Strahlen auf dem Bildsensor bei alleiniger Verwendung des Kameraobjektivs, bei Verwendung einer zwischen dem Kameraobjektiv und dem Bildsensor eingebrachten Planplatte, bei Verwendung einer zwischen dem Kameraobjektiv und dem Bildsensor eingebrachten dünnen Sammellinse sowie bei Verwendung einer zwischen dem Kameraobjektiv und dem Bildsensor eingebrachten Zusatzoptik der mehreren Zusatzoptiken und

Fig. 5A bis 5C  eine jeweilige schematische Darstellung einer Zusatzoptik.

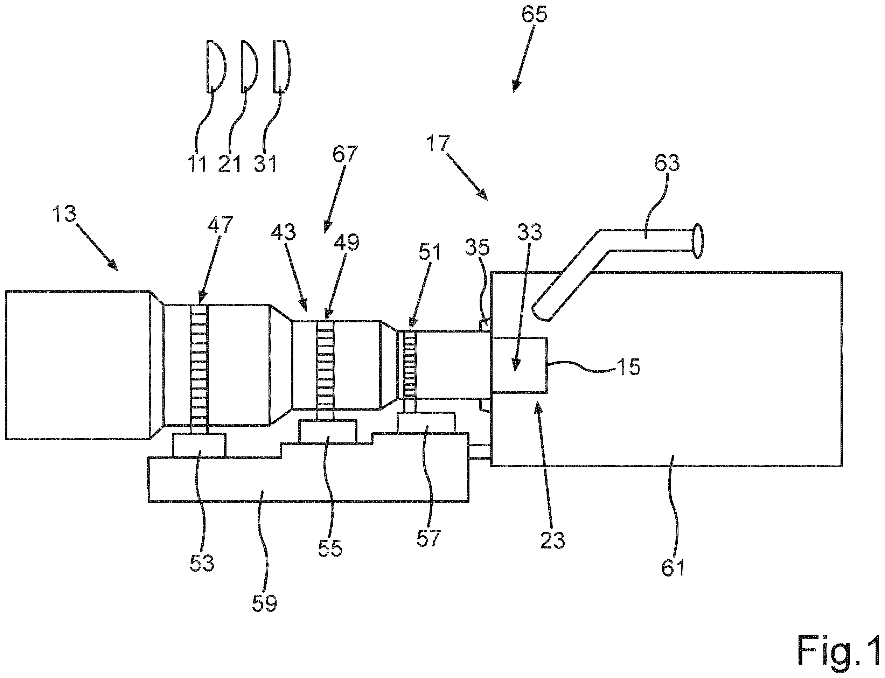

Fig. 1 zeigt ein Kamerasystem 65, welches eine Kamera 17 sowie ein Objektivsystem 67 umfasst. Das Objektivsystem 67 umfasst ein wahlweise mit der Kamera 17 koppelbares Kameraobjektiv 13, wobei das Kameraobjektiv 13 an einem Objektivanschluss 35 der Kamera 17 befestigbar ist. Insbesondere kann es sich bei dem Kameraobjektiv 13 daher um ein Wechselobjektiv handeln, so dass wahlweise auch andere Kameraobjektive mit der Kamera 17 koppelbar sein können. Die Kamera 17 kann insbesondere als Bewegtbildkamera ausgebildet sein.

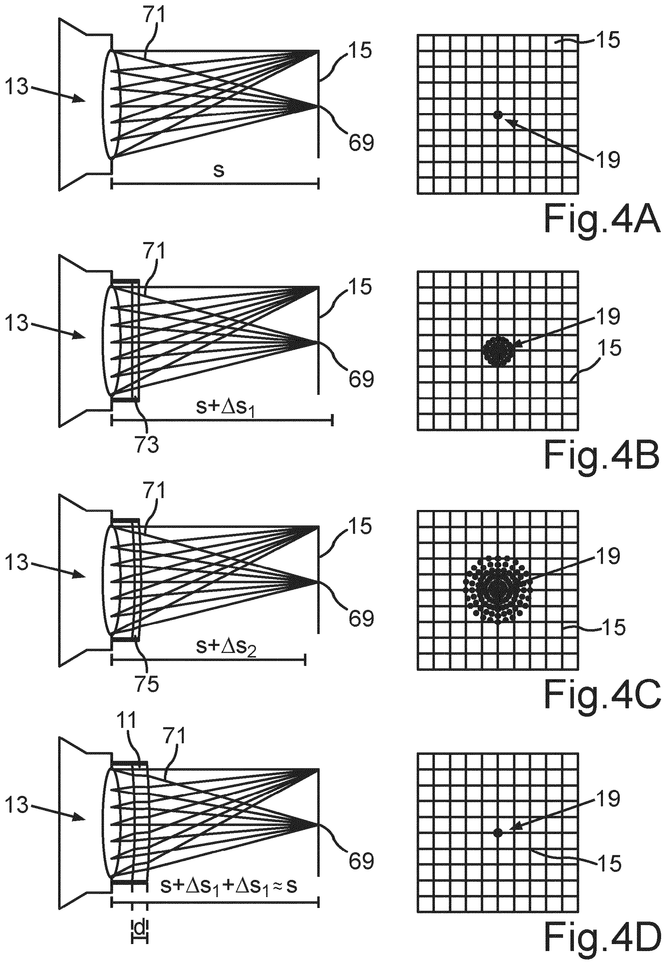

Das Kameraobjektiv 13 ist dazu ausgebildet, durch eine Blende 43 eintreffende Lichtstrahlen auf einen Bildsensor 15 der Kamera 17 zu leiten und dadurch eine Abbildung 19 auf dem Bildsensor 15 zu erzeugen (vgl. auch Fig. 4A bis 4D). Der Bildsensor 15 ist dazu an einem Ende eines in einem Kamerakörper 61 der Kamera 17 vorgesehenen Hohlraums 33 angeordnet, so dass aus dem Kameraobjektiv 13 austretenden Lichtstrahlen lediglich den Hohlraum 33 durchqueren und ohne weitere Beeinflussung auf dem Bildsensor 15 auftreffen können, wobei allerdings auch plane Filterelemente vorgesehen sein können (nicht gezeigt).

Das dargestellte Kameraobjektiv 13 weist zudem drei Objektivringe 47, 49 und 51 auf, die durch jeweilige Objektivstellmotoren 53, 55 und 57 drehbar sind. Durch Drehen der Objektivringe 47, 49 und 51 können nicht gezeigte optische Elemente, insbesondere Linsen, des Kameraobjektivs 13 relativ zueinander verschoben werden, um beispielsweise einen Fokus und/oder einen Zoom-Faktor anpassen zu können. Zudem kann durch Drehen eines der Objektivringe 47, 49 und 51 beispielsweise eine Öffnung der Blende 43 anpassbar sein.

Während bei der gezeigten Ausführungsform beispielhaft eine Ansteuerung der Objektivringe 47, 49 und 51 über jeweilige Objektivstellmotoren 53, 55 und 57 gezeigt ist, welche über eine Halterung 59 an dem Kamerakörper 61 gehalten sind, kann grundsätzlich auch eine manuelle Betätigung der Objektivringe 47, 49 oder 51 oder allgemein von Objektivringen eines Kameraobjektivs 13 vorgesehen sein, um Parameter des Kameraobjektivs 13 einstellen zu können. Eine Ansteuerung über die Objektivstellmotoren 53, 55 und 57 kann jedoch beispielsweise auch eine ferngesteuerte Einstellung des Kameraobjektivs 13 ermöglichen.

Insbesondere kann das Kameraobjektiv 13 dazu eingerichtet sein, eine möglichst fehlerfreie Abbildung auf dem Bildsensor 15 zu erzeugen und daher im Hinblick auf etwaige Abbildungsfehler möglichst präzise korrigiert eingestellt sein. Gerade bei der Durchführung von Bewegtbildaufnahmen kann es jedoch gewünscht sein, einen bestimmten "Look" eines alten oder sogenannten Vintage-Objektivs nachzubilden, wobei dieser "Look" insbesondere durch jeweilige, für das Vintage-Objektiv charakteristische Abbildungsfehler gekennzeichnet sein kann. Um einen solchen "Look" nachbilden zu können und die durch das Kameraobjektiv 13 auf dem Bildsensor 15 erzeugte optische Abbildung 19 im Hinblick auf solche Abbildungsfehler beeinflussen zu können, umfasst das Kamerasystem 65 bzw. das Objektivsystem 67 ferner mehrere Zusatzoptiken 11, 21 und 31 mit positiver Brechkraft, von denen jeweils eine wahlweise zwischen dem Kameraobjektiv 13 und dem Bildsensor 15 der Kamera 17 eingebracht werden kann. Insbesondere können die Zusatzoptiken 11, 21 und 31 dazu ausgebildet sein, sphärische Aberrationen zu erzeugen, so dass bei einer Aufnahme mit dem Kameraobjektiv 13 und eingebrachten Zusatzoptiken 11, 21 oder 31 der Eindruck entstehen kann, die Aufnahme sei mit einem älteren bzw. einem Vintage-Objektiv durchgeführt worden.

Jedoch ist die Brechkraft der Zusatzoptiken 11, 21 und 31 derart auf eine jeweilige Mittendicke d der Zusatzoptiken 11, 21 und 31 abgestimmt, dass für eine vorbestimmte Arbeitsblende des Kameraobjektivs 13 ein durch das Kameraobjektiv 13 definiertes Auflagemaß (also ein durch das Kameraobjektiv 13 festgelegtes Auflagemaß, welches dem Auflagemaß der zugeordneten Kamera 17 entspricht) durch das Einbringen einer der Zusatzoptiken 11, 21 und 31 im Wesentlichen unverändert bleibt. Mit anderen Worten entspricht das durch das System aus Kameraobjektiv 13 und Zusatzoptik 11 definierte Auflagemaß dem durch das Kameraobjektiv 13 allein definierten Auflagemaß. Dies wird nachstehend insbesondere im Zusammenhang mit den Fig. 4A bis 4D noch genauer erläutert.

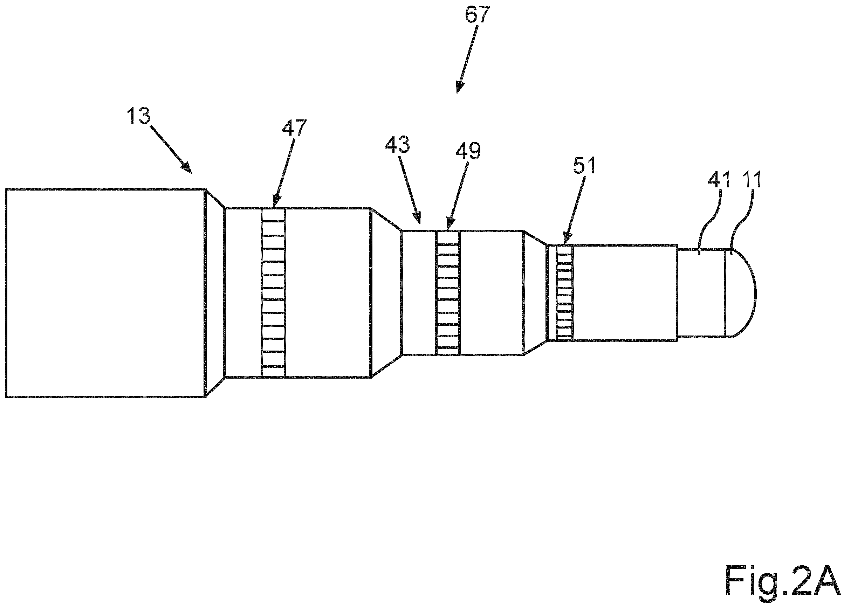

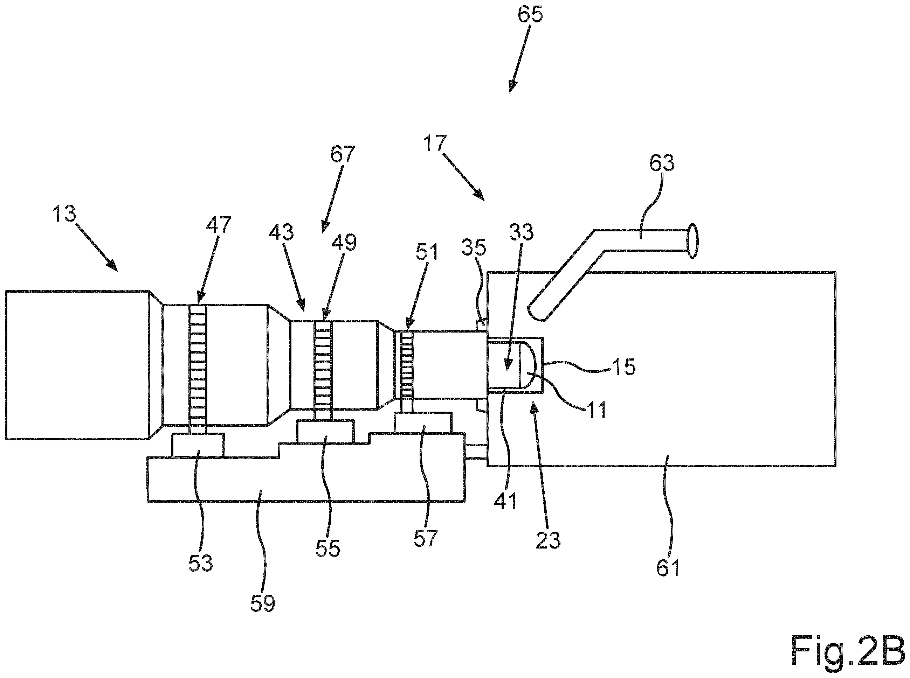

Zunächst ist in Fig. 2A jedoch nochmals das Objektivsystem 67 veranschaulicht, wobei die Zusatzoptik 11 über einen Optikhalter 41 mit dem Kameraobjektiv 13 verbunden ist. Die Zusatzoptik 11 kann von dem Optikhalter 41 beispielsweise magnetisch oder mechanisch gehalten sein. Wie Fig. 2B zeigt, kann das Kameraobjektiv 13 mit der verbundenen Zusatzoptik 11 daraufhin erneut unmittelbar an dem Objektivanschluss 35 mit der Kamera 17 gekoppelt werden, wobei die an dem Kameraobjektiv 13 gehaltene Zusatzoptik 11 in den Hohlraum 33 des Kamerakörpers 61 eingeführt und innerhalb einer hinteren Schnittweite 23 des Kameraobjektivs 13 eingebracht werden kann.

Indem das Kameraobjektiv 13 auch bei eingebrachter Zusatzoptik 11 unmittelbar an dem Objektivanschluss 35 der Kamera 17 befestigt werden kann, verändert sich durch das Einbringen der Zusatzoptik 11 ein mechanisches Abstandsmaß des Kamerasystems 65 nicht. Da zudem - wie nachstehend noch erläutert ist - für die vorbestimmte Arbeitsblende des Kameraobjektivs 13 auch ein durch das Kameraobjektiv 13 festgelegtes Auflagemaß durch das Einbringen der Zusatzoptik 11 im Wesentlichen unverändert bleibt, kann somit eine Fokusskala des Kameraobjektivs 13 auch bei einem Einbringen der Zusatzoptik 11 erhalten bleiben, so dass sich auch die Bedienung des Kameraobjektivs 13 durch das Einbringen der Zusatzoptik 11 nicht verändert. Vielmehr kann das Kameraobjektiv 13 in gewohnter Weise angesteuert werden, wobei durch die Zusatzoptik 11 lediglich der "Look" des Kameraobjektivs 13 in gewünschter Weise angepasst werden kann.

Zu den Fig. 1, 2A und 2B ist noch anzumerken, dass der Optikhalter 41 nicht maßstabsgerecht dargestellt ist. Ferner muss der Hohlraum 33 zum Aufnehmen der Zusatzoptik 11 nicht in dem Kamerakörper 61 ausgebildet sein, sondern die Zusatzoptik 11 kann auch teilweise oder vollständig in einem dem Kamerakörper 61 zugewandten Hohlraum des Kameraobjektivs 13 aufgenommen sein.

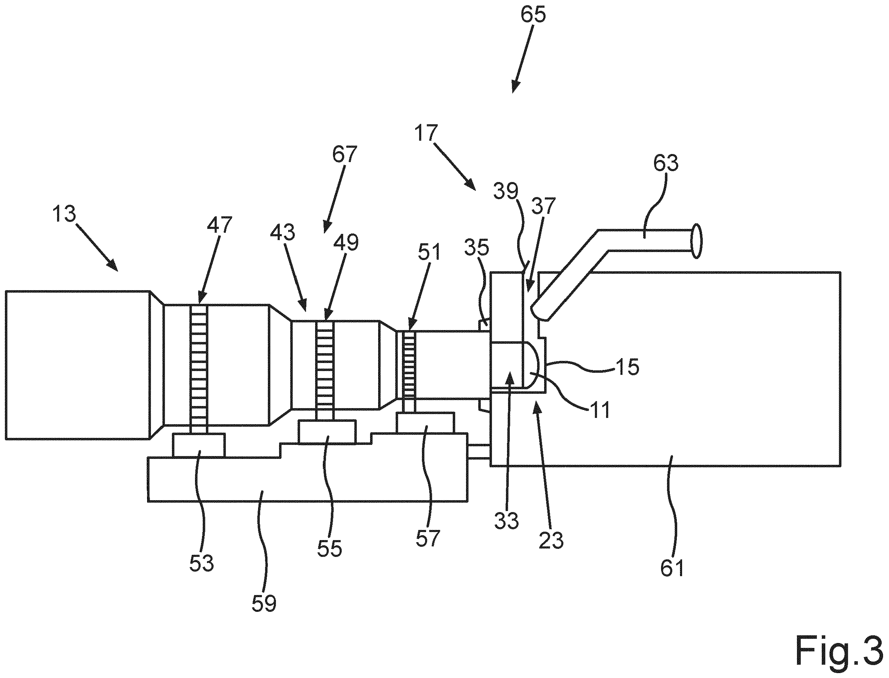

Fig. 3 zeigt eine weitere Ausführungsform des Kamerasystems 65, bei welcher der Kamerakörper 61 eine Aufnahme 37 aufweist, in welche die Zusatzoptik 11 einbringbar ist. Auch bei dieser Ausführungsform kann das Kameraobjektiv 13 somit unabhängig davon, ob die Zusatzoptik 11 eingebracht ist oder nicht, unmittelbar an dem Objektivanschluss 35 der Kamera 17 befestigt werden, so dass das Einbringen der Zusatzoptik 11 nicht mit einer Veränderung des mechanischen Auflagemaßes einhergeht. Um ein Eintreten von Staub in den Hohlraum 33, insbesondere auch bei einer Verwendung des Kameraobjektivs 13 ohne die Zusatzoptik 11, zu verhindern, ist ein Verschluss 39 vorgesehen, durch welchen die Aufnahme 37 wahlweise verschlossen werden kann.

Die Fig. 4A bis 4D veranschaulichen die Ausbildung der Zusatzoptik 11 derart, dass eine für eine vorbestimmte Arbeitsblende des Kameraobjektivs 13 durch das Kameraobjektiv 13 definierte Auflagemaß durch das Einbringen der Zusatzoptik 11 im Wesentlichen unverändert bleibt, indem die Brechkraft der Zusatzoptik 11 entsprechend auf die Mittendicke der Zusatzoptik 11 abgestimmt ist. Dazu ist in den Fig. 4A bis 4D in einem jeweiligen linken Teil der Figuren zunächst schematisch ein Strahlengang von durch das Kameraobjektiv 13 hindurch und auf den Bildsensor 15 auftreffenden Lichtstrahlen 71 gezeigt, während auf einer jeweiligen rechten Seite der Figuren eine erzeugte Abbildung 19 an einer Bildmitte 69 des Bildsensors 15 bzw. an einem Schnittpunkt zwischen einer optischen Achse des Kameraobjektivs 13 und dem Bildsensor 15 dargestellt ist. Der Kamerakörper, an dessen Objektivanschluss das Kameraobjektiv 13 aufliegt, ist hier nicht gezeigt.

Fig. 4A veranschaulicht zunächst einen Strahlengang durch das Kameraobjektiv 13, ohne dass die Zusatzoptik 11 oder ein sonstiges optisches Element zwischen dem Kameraobjektiv 13 und dem Bildsensor 15 eingebracht ist. Das Kameraobjektiv 13 ist in einer Einstellung gezeigt, in welcher auf das Kameraobjektiv 13 parallel zu der optischen Achse eintreffende Lichtstrahlen 71 auf den Bildsensor 15 fokussiert sind. Dargestellt ist ferner das durch das Kameraobjektiv 13 definierte Auflagemaß s des Kameraobjektivs 13.

Fig. 4B veranschaulicht den Strahlengang bei unveränderter Einstellung des Kameraobjektivs 13, wobei jedoch eine Planplatte 73 zwischen dem Kameraobjektiv 13 und dem Bildsensor 15 eingebracht wurde. Das Einbringen dieser Planplatte 73 führt zu einem Versatz des Fokuspunkts von dem Kameraobjektiv 13 weg, welcher als Glaswegverlängerung bezeichnet werden kann. Insofern liegt ein Fokuspunkt infolge des Einbringens der Planplatte 73 hinter dem Bildsensor 15, so dass ein Auflagemaß des optischen Systems, welches das Kameraobjektiv 13 und die Planplatte 73 umfasst, im Vergleich zu dem Auflagemaß s des bloßen Kameraobjektivs 13 um einen Wert $\Delta s1$ vergrößert ist.

In Fig. 4C ist schematisch das Einbringen einer dünnen Sammellinse 75 zwischen dem Kameraobjektiv 13 und dem Bildsensor 15 veranschaulicht. Die dünne Sammellinse 75 weist eine positive Brechkraft auf, so dass das Einbringen der Sammellinse 75 mit einer Verschiebung des Fokuspunktes auf das Kameraobjektiv 13 zu einhergeht. Das optische System, welches das Kameraobjektiv 13 sowie die dünne Sammellinse 75 umfasst, weist somit ein im Vergleich zu dem Auflagemaß s des bloßen Kameraobjektivs 13 um einen negativen Wert $\Delta s2$ verkürztes Auflagemaß auf.

Die erfindungsgemäß verwendeten Zusatzoptiken 11, 21 und 31 sind hingegen derart ausgelegt, dass sich die anhand der Fig. 4B veranschaulichte Vergrößerung des Auflagemaßes durch Einbringen eines Glaswegs in den Strahlengang und die anhand von Fig. 4C veranschaulichte Verkürzung des Auflagemaßes durch Einbringen einer Sammellinse gerade kompensieren. Dies ist in Fig. 4D gezeigt. Das optische System, welches das Kameraobjektiv 13 und die zwischen dem Kameraobjektiv 13 und dem Bildsensor 15 eingebrachte Zusatzoptik 11, 21 oder 31 umfasst, weist somit zumindest bei einer bestimmten Einstellung der Blende 43 des Kameraobjektivs 13 weiterhin das Auflagemaß s auf, welches durch das Kameraobjektiv 13 an sich (also ohne die Zusatzoptik) definiert ist. Es gilt also zumindest im Wesentlichen: s + $\Delta s1$ + $\Delta s2$ = s. Hierzu sind, wie bereits erwähnt, die Mittendicke d der Zusatzoptik 11 und deren Brechkraft gerade derart aufeinander abgestimmt, dass die durch die Mittendicke d bestimmte Glaswegverlängerung und die durch die Brechkraft bestimmte Verkürzung der Brennweite sich ausgleichen und das Auflagemaß im Wesentlichen unverändert bleibt. Das Einbringen der Zusatzoptiken 11, 21 oder 31 ermöglicht es somit, gezielt optische Aberrationen in die Abbildung 19 einzubringen, ohne jedoch eine durch das Kameraobjektiv 13 vorgegebene Fokuseinstellung zu beeinflussen.

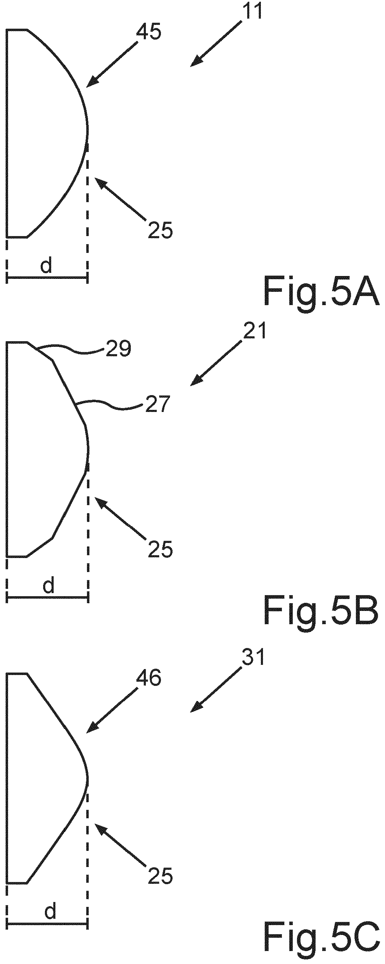

Die Fig. 5A bis 5C veranschaulichen beispielhaft mögliche Ausführungsformen von Zusatzoptiken 11, 21 und 31. Die in Fig. 5A gezeigte Zusatzoptik 11 weist an einer dem Kameraobjektiv 13 abgewandten Fläche 25 einen asphärischen Krümmungsverlauf 45 auf, so dass eine jeweilige Brechung von auf die Zusatzoptik 11 auftreffenden Lichtstrahlen von einem Austrittsort eines jeweiligen Lichtstrahls aus der Zusatzoptik 11 abhängig ist. Dies ermöglicht es, ortsabhängige Abbildungsfehler in der auf dem Bildsensor 15 erzeugten Abbildung 19 zu erzeugen.

Bei der anhand von Fig. 5B veranschaulichten Ausführungsform der Zusatzoptik 21 umfasst die dem Kameraobjektiv 13 abgewandte Fläche 25 der Zusatzoptik 21 durch mehrere plane Flächen 27 und 29, welche sich in unterschiedlichen Winkeln zu der optischen Achse des Kameraobjektivs 13 erstrecken.

Bei der Ausführungsform der Zusatzoptik 31 gemäß Fig. 5C ist die dem Kameraobjektiv 13 abgewandte Fläche 25 erneut unregelmäßig gekrümmt ausgebildet und weist einen weiteren Krümmungsverlauf 46 auf, welcher sich insbesondere von dem Krümmungsverlauf 45 der Ausführungsform der Zusatzoptik 11 gemäß Fig. 5A unterscheidet.

Alternativ oder zusätzlich können auch die die dem Kameraobjektiv 13 zugewandten Flächen der Zusatzoptiken 11, 21, 31 die beschriebenen Formen und Krümmungsverläufe aufweisen.

Insofern unterscheiden sich die Flächen 25 der Zusatzoptiken 11, 21 und 31 voneinander, so dass durch jede der Zusatzoptiken 11, 21, 31 jeweilige charakteristische optische Aberrationen erzeugt werden können, wenn die Zusatzoptik 11, 21 oder 31 zwischen dem Kameraobjektiv 13 und dem Bildsensor 15 eingebracht wird. Jedoch können bei sämtlichen Zusatzoptiken 11, 21 und 31 die Mittendicke d, eine jeweilige Glassorte und eine Krümmung der Fläche 25 im Bereich der optischen Achse derart aufeinander abgestimmt sein, dass eine durch die Mittendicke d bestimmte Glaswegverlängerung und die positive Brechkraft der Zusatzoptik 11, 21 oder 31 einander gerade ausgleichen und ein durch das Kameraobjektiv 13 bestimmtes Auflagemaß s durch das Einbringen einer der Zusatzoptiken 11, 21 und 31 im Wesentlichen unverändert bleibt. Insbesondere können die Zusatzoptiken 11, 21 und 31 es ermöglichen, eine Schärfe der Abbildung 19 und/oder einen Schärfeverlauf innerhalb der Abbildung 19, insbesondere von dem Bildmittelpunkt 69 zu jeweiligen Randbereichen des Bildsensors 15 hin, zu beeinflussen und die Schärfe insbesondere in Richtung der Bildränder zunehmend zu verringern, um dadurch einen gewünschten "Look" oder ein gewünschtes Bokeh zu erreichen.

Bezugszeichenliste

| 11 | Zusatzoptik |
| 13 | Kameraobjektiv |
| 15 | Bildsensor |
| 17 | Kamera |
| 19 | Abbildung |
| 21 | Zusatzoptik |
| 23 | hintere Schnittweite |
| 25 | Fläche |
| 27 | plane Fläche |

| | |
|---|---|
| 29 | plane Fläche |
| 31 | Zusatzoptik |
| 33 | Hohlraum |
| 35 | Objektivanschluss |
| 37 | Aufnahme |
| 39 | Versschluss |
| 41 | Optikhalter |
| 43 | Blende |
| 45 | Krümmungsverlauf |
| 46 | Krümmungsverlauf |
| 47 | Objektivring |
| 49 | Objektivring |
| 51 | Objektivring |
| 53 | Objektivstellmotor |
| 55 | Objektivstellmotor |
| 57 | Objektivstellmotor |
| 59 | Halterung |
| 61 | Kamerakörper |
| 63 | Sucher |
| 65 | Kamerasystem |
| 67 | Objektivsystem |
| 69 | Bildmitte |
| 71 | Lichtstrahl |
| 73 | Planplatte |
| 75 | Sammellinse |
| d | Mittendicke |
| s | Auflagemaß |
| $\Delta s1$ | Vergrößerung des Auflagemaßes |
| $\Delta s2$ | Verkürzung des Auflagemaßes |

## Patentansprüche

1. Verwendung einer Zusatzoptik (11, 21, 31) mit positiver Brechkraft zur Beeinflussung einer durch ein Kameraobjektiv (13) auf einem Bildsensor (15) einer Kamera (17) erzeugten optischen Abbildung (19) durch Einbringen der Zusatzoptik (11, 21, 31) zwischen dem Kameraobjektiv (13) und dem Bildsensor (15) der Kamera (17), wobei die Mittendicke (d) der Zusatzoptik (11, 21, 31) und die Brechkraft der Zusatzoptik (11, 21, 31) derart aufeinander abgestimmt sind, dass für eine vorbestimmte Arbeitsblende des Kameraobjektivs (13) ein durch das Kameraobjektiv (13) definiertes Auflagemaß (s) durch das Einbringen der Zusatzoptik (11, 21, 31) im Wesentlichen unverändert bleibt.

2. Verwendung einer Zusatzoptik (11, 21, 31) nach Anspruch 1,
wobei die Zusatzoptik (11, 21, 31) dazu ausgebildet ist, sphärische Aberrationen zu erzeugen.

3. Verwendung einer Zusatzoptik (11, 21, 31) nach Anspruch 1 oder 2,
wobei die Zusatzoptik (11, 21, 31) innerhalb der hinteren Schnittweite (23) des Kameraobjektivs (13) eingebracht wird.

4. Verwendung einer Zusatzoptik (11, 21, 31) nach einem der vorhergehenden Ansprüche,
wobei wenigstens eine Fläche (25) der Zusatzoptik (11, 21, 31) zumindest abschnittsweise asphärisch ausgebildet ist.

5. Verwendung einer Zusatzoptik (11, 21, 31) nach einem der vorhergehenden Ansprüche,
wobei die Zusatzoptik (11, 21, 31) in einem Hohlraum (33) zwischen dem Kameraobjektiv (13) und der Kamera (17) aufgenommen wird.

6. Objektivsystem (67) umfassend ein mit einer Kamera (17) wahlweise koppelbares Kameraobjektiv (13) sowie eine zwischen dem Kameraobjektiv (13) und einem Bildsensor (15) der Kamera (17) einbringbare Zusatzoptik (11, 21, 31) mit positiver Brechkraft, wobei die Mittendicke (d) der Zusatzoptik (11, 21, 31) und die Brechkraft der Zusatzoptik (11, 21, 31) derart aufeinander abgestimmt sind, dass für eine vorbestimmte Arbeitsblende des Kameraobjektivs (13) ein durch das Kameraobjektiv (13) definiertes Auflagemaß (s) durch das Einbringen der Zusatzoptik (11, 21, 31) im Wesentlichen unverändert bleibt.

7. Objektivsystem (67) nach Anspruch 6,
wobei das Kameraobjektiv (13) unmittelbar an einem Objektivanschluss (35) der Kamera (17) befestigbar ist, während die Zusatzoptik (11, 21, 31) zwischen dem Kameraobjektiv (13) und dem Bildsensor (15) der Kamera (17) eingebracht ist.

8. Objektivsystem (67) nach Anspruch 6 oder 7,

wobei das Objektivsystem (67) mehrere verschiedene wahlweise zwischen dem Kameraobjektiv (13) und dem Bildsensor (15) der Kamera (17) einbringbare Zusatzoptiken (11, 21, 31) mit positiver Brechkraft umfasst, deren jeweilige Mittendicke (d) und Brechkraft derart aufeinander abgestimmt sind, dass für die vorbestimmte Arbeitsblende des Kameraobjektivs (13) das durch das Kameraobjektiv (13) definierte Auflagemaß (s) durch das Einbringen der jeweiligen Zusatzoptik (11, 21, 31) unverändert bleibt,
wobei die mehreren Zusatzoptiken (11, 21, 31) dazu ausgebildet sind, unterschiedliche jeweilige sphärische Aberrationen in einer durch das Kameraobjektiv (13) aufgenommenen Abbildung (19) zu erzeugen.

9. Objektivsystem (67) nach Anspruch 8,
wobei die mehreren Zusatzoptiken (11, 21, 31) verschiedene Linsendurchbiegungen aufweisen.

10. Kamerasystem (65) (17) umfassend eine Kamera (17), die einen Bildsensor (15) aufweist, und ein Objektivsystem (67) nach einem der Ansprüche 6 bis 9.

Fig.1

Fig.2A

Fig.2B

EP 4 403 973 A1

Fig.3

Fig.4A

Fig.4B

Fig.4C

Fig.4D

45
11
25
d

Fig.5A

29
21
27
25
d

Fig.5B

46
31
25
d

Fig.5C

Europäisches
Patentamt

European
Patent Office

Office européen
des brevets

# EUROPÄISCHER RECHERCHENBERICHT

**Nummer der Anmeldung**

EP 24 15 0769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2016/299338 A1 (AOKI KOJI [JP]) 13. Oktober 2016 (2016-10-13) * Absatz [0181]; Abbildungen 3,5; Beispiel 1 * | 1-10 | INV. G02B7/14 G02B13/00 G02B13/18 G02B27/00 |
| | ----- | | |
| A | EP 2 590 016 A1 (KOWA CO [JP]) 8. Mai 2013 (2013-05-08) * Absätze [0030] - [0052]; Abbildungen 1-5 * | 1-10 | |
| | ----- | | |
| A | EP 1 667 437 A1 (FUJINON CORP [JP]) 7. Juni 2006 (2006-06-07) * Absätze [0018] - [0036]; Abbildung 1 * | 1-10 | |
| | ----- | | |
| A | EP 2 500 758 A1 (PREMIER SYSTEMS USA INC [US]) 19. September 2012 (2012-09-19) * Absätze [0029] - [0040]; Abbildungen 1-5 * | 1-10 | |
| | ----- | | |

**RECHERCHIERTE SACHGEBIETE (IPC)**

G02B

Der vorliegende Recherchenbericht wurde für alle Patentansprüche erstellt

| Recherchenort | Abschlußdatum der Recherche | Prüfer |
|---|---|---|
| München | 14. Mai 2024 | Stemmer, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

ВĞ

**ANHANG ZUM EUROPÄISCHEN RECHERCHENBERICHT
ÜBER DIE EUROPÄISCHE PATENTANMELDUNG NR.**

EP 24 15 0769

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2024

| Im Recherchenbericht angeführtes Patentdokument | Datum der Veröffentlichung | Mitglied(er) der Patentfamilie | Datum der Veröffentlichung |
|---|---|---|---|
| US 2016299338 A1 | 13-10-2016 | CN 106054362 A | 26-10-2016 |
| | | JP 6618268 B2 | 11-12-2019 |
| | | JP 2016200630 A | 01-12-2016 |
| | | US 2016299338 A1 | 13-10-2016 |
| EP 2590016 A1 | 08-05-2013 | EP 2590016 A1 | 08-05-2013 |
| | | JP 2012013730 A | 19-01-2012 |
| | | US 2013094101 A1 | 18-04-2013 |
| | | WO 2012002241 A1 | 05-01-2012 |
| EP 1667437 A1 | 07-06-2006 | AT E387060 T1 | 15-03-2008 |
| | | CN 1782770 A | 07-06-2006 |
| | | DE 602005004866 T2 | 12-02-2009 |
| | | EP 1667437 A1 | 07-06-2006 |
| | | JP 2006162757 A | 22-06-2006 |
| | | US 2006140611 A1 | 29-06-2006 |
| EP 2500758 A1 | 19-09-2012 | BR 112013005617 A2 | 18-03-2014 |
| | | CN 102804018 A | 28-11-2012 |
| | | CN 103869444 A | 18-06-2014 |
| | | EP 2500758 A1 | 19-09-2012 |
| | | EP 2966486 A1 | 13-01-2016 |
| | | JP 5886881 B2 | 16-03-2016 |
| | | JP 2014510949 A | 01-05-2014 |
| | | KR 20140013038 A | 04-02-2014 |
| | | US 2012236425 A1 | 20-09-2012 |
| | | US 2013002939 A1 | 03-01-2013 |
| | | US 2013135759 A1 | 30-05-2013 |
| | | US 2014253789 A1 | 11-09-2014 |
| | | US 2014320987 A1 | 30-10-2014 |
| | | US 2016103292 A1 | 14-04-2016 |
| | | US 2017351056 A1 | 07-12-2017 |
| | | WO 2012128936 A1 | 27-09-2012 |

EPO FORM P0461

Für nähere Einzelheiten zu diesem Anhang : siehe Amtsblatt des Europäischen Patentamts, Nr.12/82